# FASCICULE DE BREVET EUROPEEN

(11) **EP 2 639 034 B1**
(45) Date de publication et mention de la délivrance du brevet: **15.10.2014**
(21) Numéro de dépôt: 13305271.2
(22) Date de dépôt: 12.03.2013
(51) Int. Cl.: B29C 43/10, B29C 70/34, B29C 70/44

(54) **Procédé de réalisation d'une pièce en matériau composite et outillage pour sa mise en oeuvre**
Verfahren zur Herstellung eines Verbundwerkstoffteils, und Werkzeug zur Umsetzung dieses Verfahrens
Method for manufacturing a part using composite material and tool implementing same

(30) Priorité: 12.03.2012 FR 1252175
(43) Date de publication de la demande: 18.09.2013
(73) Titulaire: Airbus Opérations SAS, 31060 Toulouse (FR)
(72) Inventeur: De Mattia, Denis, 44115 Basse Goulaine (FR)
(74) Mandataire: Fantin, Laurent

(56) Documents cités:
- EP-A1- 1 243 401
- WO-A1-2008/086022
- WO-A1-2009/020466
- WO-A1-2009/090397
- FR-A1- 2 928 295

## Description

La présente invention se rapporte à un procédé de réalisation d'une pièce en matériau composite ainsi qu'à un outillage pour sa mise en oeuvre. L'invention concerne plus particulièrement un procédé de réalisation d'un cadre d'un fuselage d'un aéronef.

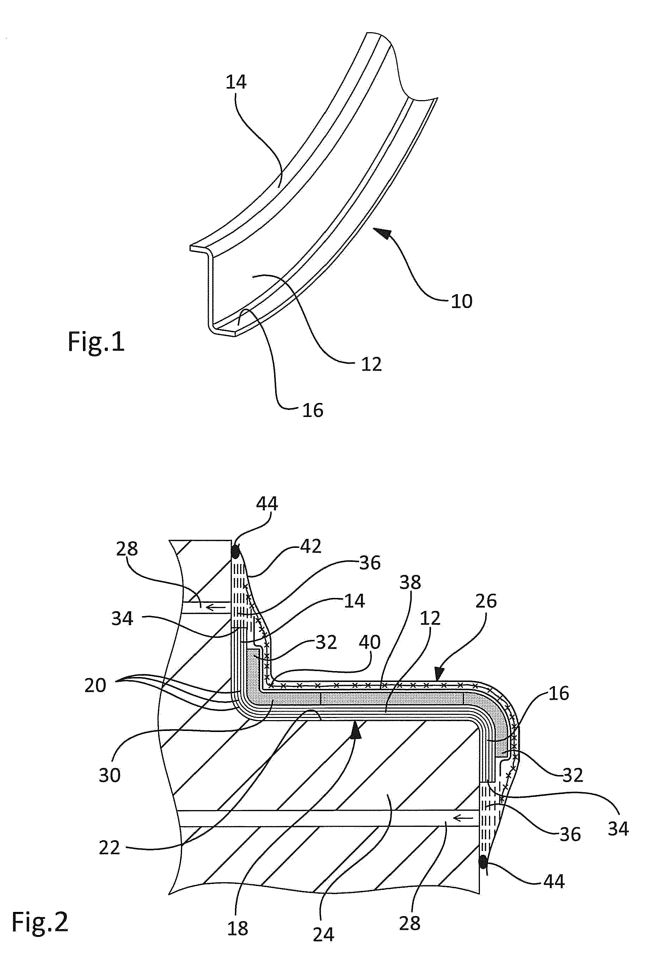

Selon un mode de réalisation illustré sur la figure 1, un cadre de fuselage 10 se présente sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Un procédé de réalisation d'un tel cadre en matériau composite est décrit dans le document FR-2,928.295.

Selon ce document, on réalise dans un premier temps une bande sensiblement rectangulaire à partir d'un empilage de trois nappes de fibres pré-imprégnées, chaque nappe ayant des fibres orientées selon une direction, la bande comportant des nappes avec des orientations de fibres différentes, une nappe avec des fibres à 30°, une nappe avec des fibres à 90° et une autre nappe avec des fibres à 150°.

Dans un second temps, la bande de nappes de fibres est disposée sur un mandrin en matériau déformable puis comprimée sur ce mandrin de manière à épouser sa forme.

Le mandrin déformable est susceptible de se déformer entre une position rectiligne et une position courbe mais a une section transversale incompressible ou quasi incompressible.

En suivant, la bande déformée disposée sur le mandrin en matériau déformable est mise en contact contre un outillage chauffé présentant en périphérie des sections radiales avec un profil complémentaire aux sections transversales du mandrin. Ainsi lors du cintrage, la bande est comprimée et subit une augmentation de température.

Suite à la mise en place de cette première bande, on découpe une deuxième bande de trois nappes de fibres pré-imprégnées pour la disposer sur un autre mandrin déformable puis la comprimer sur ce dernier.

En suivant, cette deuxième bande déformée sur son mandrin en matériau déformable est mise en contact contre la première bande toujours en place sur l'outillage puis comprimée contre la première bande.

Pour obtenir un cadre, il est nécessaire de rapporter comme précédemment plusieurs bandes les unes sur les autres, avant de polymériser l'ensemble ainsi formé.

Plus communément, selon un mode opératoire, pour réaliser une pièce en matériau composite, on réalise dans un premier temps une préforme 18 de fibres pré-imprégnées, en empilant des couches 20 les unes sur les autres sur une surface de dépose 22 d'un outillage 24, comme illustré sur la figure 2, puis on soumet cette préforme 18 à une phase de polymérisation.

La présente invention se rapporte plus particulièrement à cette phase de polymérisation lors de laquelle la préforme 18 est recouverte d'un habillage 26. Sur le plan fonctionnel, cet habillage 26 doit :
- conférer à l'une des surfaces de la préforme sa forme géométrique,
- assurer la compression de la préforme à partir d'une pression externe,
- permettre l'extraction des gaz inclus dans la préforme, et
- permettre à la préforme d'être chauffée en minimisant les gradients thermiques.

Selon un mode de réalisation, l'outillage 24 comprend des moyens pour extraire les gaz qui débouchent via au moins un orifice 28 au niveau de la surface de dépose 22, en dehors de la zone recouverte par la préforme, mais à une distance réduite de ladite zone.

L'habillage 26 comprend :
- une plaque de conformage 30 dont les bords périphériques 32 sont légèrement en retrait par rapport aux bords périphériques (ou chants) 34 de la préforme,
- des tissus drainants 36 prévus en périphérie de la préforme 18 et de la plaque de conformage 30, en contact avec la surface de dépose 22 au niveau des orifices 28 des moyens d'extraction des gaz,
- un film de démoulage 38 recouvrant la plaque de conformage 30,
- un feutre de drainage 40 qui recouvre la plaque de conformage 30 et les tissus drainants 36, et
- une vessie 42 qui est reliée à la surface de dépose 22 via des moyens d'étanchéité 44 en périphérie des tissus drainant 36.

Après la mise en place de cet habillage, la préforme subit une phase de polymérisation à l'issue de laquelle les fibres sont noyées dans une matrice de résine, et qui s'accompagne d'un défoisonnement de la préforme se traduisant par une réduction d'épaisseurs de l'ordre de 5 à 12 %.

L'habillage 26 de l'art antérieur n'est pas pleinement satisfaisant pour les raisons suivantes :
La mise en place des différentes couches de l'habillage est relativement longue et fastidieuse, d'autant plus si la surface à recouvrir n'est pas développable.
Compte tenu de sa complexité, la mise en place de l'habillage ne peut être réalisée que manuellement et ne pas être automatisée.

Les différents éléments d'habillage sont coûteux tant à l'achat que pour les recycler en fin de vie.

Lorsque la surface de la pièce en contact avec l'habillage n'est pas développable, les risques de rupture de la vessie ne sont pas négligeables en cours de polymérisation avec pour conséquence la mise au rebut de la pièce.

Enfin, ce type d'habillage ne garantit pas la maitrise de la géométrie de la surface recouverte par l'habillage pour les motifs suivants : En premier lieu, la pression extérieure appliquée sur l'une des faces de la plaque de conformage n'est pas strictement égale en tout point à la force de réaction exercée par la préforme sur la face opposée de la préforme. Du fait que la plaque de conformage ne soit en contact qu'avec la préforme, elle n'est pas stabilisée et peut se déplacer légèrement en raison de cette différence de forces si bien que le respect des tolérances géométriques (plus particulièrement celles liées aux épaisseurs) peut ne pas être assuré. En second lieu, lorsque la surface extérieure de la plaque de conformage n'est pas développable, la vessie exerce des efforts sur la plaque de conformage qui peuvent ne pas être strictement orientés selon la normale et provoquer la déformation ou le déplacement de ladite plaque de conformage si bien que le respect des tolérances géométriques (plus particulièrement celles liées aux épaisseurs) peut ne pas être assuré.

On connait d'après le document WO2009/090397 un outillage comprenant un moule en deux parties, une partie inférieure rigide et une partie supérieure avec une épaisseur fine et variable qui permet d'ajuster la pression exercée lors de la polymérisation en fonction de l'épaisseur de la partie supérieure. Cet outillage ne permet pas de garantir le respect des tolérances géométriques.
Le document EP 1 243 401 décrit un outillage comprenant une plaque de conformage utilisée à en combinaison avec un sac à vide et des cales d'espacement en mousse pour modifier les dimensions de la cavité.

Aussi, la présente invention vise à remédier aux inconvénients de l'art antérieur en proposant un procédé de réalisation d'une pièce en matériau composite permettant de réduire les coûts de production tout en limitant les risques de non-respect des tolérances dimensionnelles.

A cet effet, l'invention a pour objet un procédé de réalisation d'une pièce en matériau composite obtenue à partir d'une préforme de fibres pré-imprégnées d'une résine, le procédé consistant à :
- déposer ladite préforme sur une surface de dépose d'un outillage avec un talon périphérique délimitant une zone dont les dimensions sont supérieures à celles de la préforme de manière à la loger, ledit talon périphérique comprenant une surface d'appui distante d'une valeur H de la surface de dépose,
- recouvrir ladite préforme d'un habillage comportant une plaque de conformage délimitée par un bord périphérique qui s'étend au-delà du chant périphérique de la préforme sur tout le pourtour de la préforme, ladite plaque de conformage et ledit talon périphérique ayant des dimensions telles que la face inférieure du bord périphérique de la plaque de conformage soit en regard de la surface d'appui du talon,
- utiliser des cales calibrées pour positionner la plaque de conformage, lesdites cales ayant une épaisseur sensiblement égale à la valeur de défoisonnement de la préforme, lesdites cales étant disposées entre la surface d'appui et le bord périphérique,
- retirer lesdites cales calibrées,
- disposer des moyens d'étanchéité reliant la plaque de conformage et l'outillage, tout autour de la préforme,
- polymériser ladite préforme.

D'autres caractéristiques et avantages ressortiront de la description qui va suivre de l'invention, description donnée à titre d'exemple uniquement, en regard des dessins annexés sur lesquels :
- La figure 1 est une vue en perspective d'une portion d'un cadre d'un fuselage d'un aéronef,
- La figure 2 est une coupe d'un outillage utilisé lors de la polymérisation d'une pièce en matériau composite selon l'art antérieur,
- La figure 3 est une coupe d'un outillage utilisé lors de la polymérisation d'une pièce en matériau composite selon l'invention, et
- La figure 4 est une coupe illustrant en détails un talon périphérique.

Sur la figure 1, on a représenté un cadre de fuselage 10 sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Pour donner un ordre de grandeur, l'âme a une hauteur de 80 mm, une épaisseur de l'ordre de 4 à 6 mm. Les ailes ont une largeur de l'ordre de 30 mm. L'invention n'est pas limitée à cette forme de section et à cette application. Elle peut être utilisée pour réaliser différentes formes de pièces.

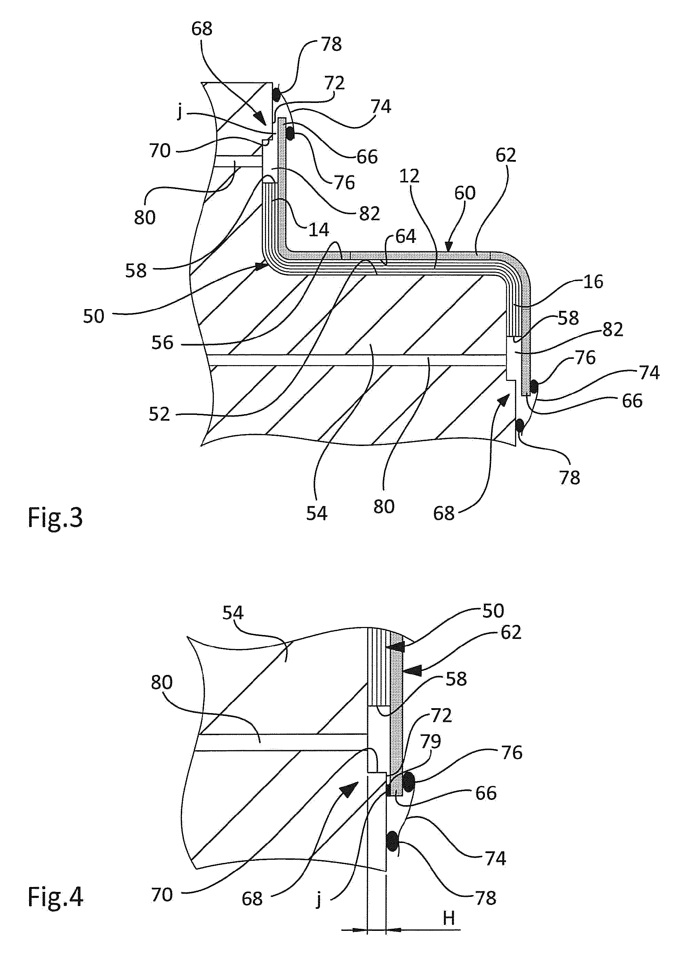

De manière général, comme illustré sur la figure 3, une pièce en matériau composite est obtenue à partir d'une préforme 50 de fibres pré-imprégnées d'une résine, ladite préforme 50 étant déposée sur une surface de dépose 52 d'un outillage 54 et étant délimitée par une surface inférieure (en contact avec la surface de dépose 52), une surface supérieure 56 et un chant périphérique 58. La surface de dépose 52 doit avoir un profil complémentaire à celui d'une surface dite première surface de la pièce à réaliser. En parallèle, la surface supérieure 56 de la préforme doit avoir un profil déterminé pour qu'après polymérisation, en tenant compte des phénomènes de défoisonnment, la surface supérieure 56 corresponde à la seconde surface de la pièce à réaliser et respecte des tolérances dimensionnelles avec la première surface, notamment en matière d'épaisseurs.

Selon un mode d'obtention, la préforme 50 est obtenue à partir d'un empilage de couches de fibres. Cependant, l'invention n'est pas limitée à ce mode d'obtention de la préforme.

Pour réaliser la phase de polymérisation, la préforme 50 est recouverte d'un habillage 60.

L'habillage 60 comprend une plaque de conformage 62 dont une surface inférieure 64 a un profil complémentaire à celui de la seconde surface de la pièce à réaliser. La plaque de conformage 62 est pleine de manière à être étanche aux gaz à la manière d'une vessie de l'art antérieur.

La plaque de conformage 62 est délimitée par un bord périphérique 66.

Selon l'invention, sur tout le pourtour de la préforme 50, le bord périphérique 66 s'étend au-delà du chant périphérique 58 de la préforme.

En parallèle, la surface de dépose 52 comprend un talon périphérique 68 délimitant une zone dont les dimensions sont supérieures à celles de la préforme 50 de manière à la loger. Le talon périphérique 68 (illustré en détails sur la figure 4) comprend d'une part une première face 70, de préférence perpendiculaire à la surface de dépose 52, distante du chant périphérique 58 sur au moins une partie du pourtour de la préforme 50, et d'autre part, une seconde face dite surface d'appui 72 distante d'une valeur H de la surface de dépose 52 et sensiblement parallèle à cette dernière.

La plaque de conformage 62 et le talon périphérique 68 ont des dimensions adaptées afin que la face inférieure du bord périphérique 66 de la plaque de conformage 62 soit en regard de la surface d'appui 72 du talon. Avantageusement, la hauteur H du talon périphérique 68 est inférieure et de préférence égale à la hauteur du chant de la pièce à réaliser en tout point du pourtour de la pièce à réaliser. Ainsi, avant polymérisation, il existe un jeu j entre la surface d'appui 72 et la plaque de conformage 62 correspondant à la valeur de défoisonnement de la préforme 50. A titre indicatif, le jeu est égal à de l'ordre de 5 à 12 % de la hauteur du chant de la préforme soit la valeur de défoisonnement. En fin de polymérisation, le bord périphérique 66 de la plaque de conformage 62 vient en contact avec la surface d'appui 72 du talon ce qui permet de garantir la hauteur du chant.

La présence de ce talon limite les mouvements de la plaque de conformage lors de la polymérisation, et plus particulièrement en fin de polymérisation afin de garantir le respect des tolérances dimensionnelles.

L'habillage 60 comprend également des moyens d'étanchéité reliant la plaque de conformage 62 et l'outillage 54, tout autour de la préforme 50.

Selon un mode de réalisation, ces moyens d'étanchéité comprennent une bande 74 souple qui s'étend sur tout le pourtour de la plaque de conformage 62, l'un des bords latéraux de ladite bande souple 74 recouvrant le bord périphérique 66 de la plaque de conformage 62 alors que l'autre bord latéral vient en contact avec l'outillage 54 au niveau de la surface d'appui 72. Un premier joint d'étanchéité 76 périphérique est intercalé entre la bande souple 74 et la surface supérieure du bord périphérique 66 de la plaque de conformage 62 alors qu'un second joint 78 d'étanchéité périphérique est intercalé entre la bande souple 74 et la surface d'appui 72.

L'outillage 54 comprend des cales calibrées 79 dont l'épaisseur est sensiblement égale à la valeur de défoisonnement de la préforme. Ces cales calibrées 79 disposées entre la surface d'appui 72 et le bord périphérique 66 de la plaque de conformage permettent de la positionner correctement. Ces cales sont retirées avant le début de la polymérisation.

L'outillage 54 comprend des moyens d'extraction de gaz qui débouchent via au moins un orifice 80 au niveau de la surface de dépose 52 entre la face 70 du talon 68 et le chant périphérique 58 de la préforme 50. Avantageusement, l'outillage 54 comprend plusieurs orifices 80, répartis sur le pourtour de la préforme, qui débouchent au niveau d'une cavité périphérique 82 qui s'étend sur tout le pourtour de la préforme, ladite cavité 82 étant délimitée par la surface de dépose 52, le chant 58 de la préforme, la plaque de conformage 62 et la surface 70 du talon 68. Cet agencement permet de favoriser l'extraction des gaz inclus dans la préforme.

Selon un mode de réalisation, l'outillage peut comprendre des moyens pour injecter un gaz dans la préforme en fin de polymérisation, comme indiqué dans la demande de brevet FR-2.959.158. Avantageusement, les orifices 80 peuvent être utilisés pour injecter un gaz.

Selon l'invention, la mise en place de l'habillage est simplifiée en raison du nombre limité d'éléments à positionner à savoir la plaque de conformage 62, puis la bande souple 74 et ses joints 76 et 78.

Compte tenu du nombre réduit d'éléments et de la rigidité de la plaque de conformage, la mise en place de l'habillage peut être au moins partiellement automatisée.

Ces éléments peuvent être utilisés plusieurs fois et leurs coûts d'achat et de recyclage sont nettement inférieurs à ceux des éléments de l'art antérieur. Selon un autre avantage, la plaque de conformage venant en appui contre le talon en fin de polymérisation, elle est parfaitement immobilisée et positionnée et le respect des tolérances dimensionnelles est donc assuré.

Selon un autre avantage, les cales calibrées facilitent le positionnement de la plaque de conformage.

## Revendications

1. Procédé de réalisation d'une pièce en matériau composite obtenue à partir d'une préforme (50) de fibres pré-imprégnées d'une résine, ledit procédé consistant à :
- déposer ladite préforme (50) sur une surface de dépose d'un outillage (54) avec un talon périphérique (68) délimitant une zone dont les dimensions sont supérieures à celles de la préforme (50) de manière à la loger, ledit talon périphérique (68) comprenant une surface d'appui (72) distante d'une valeur H de la surface de dépose (52),
- recouvrir ladite préforme (50) d'un habillage comportant une plaque de conformage (62) délimitée par un bord périphérique (66) qui s'étend au-delà du chant périphérique (58) de la préforme sur tout le pourtour de la préforme (50), ladite plaque de conformage (62) et ledit talon périphérique (68) ayant des dimensions telles que la face inférieure du bord périphérique (66) de la plaque de conformage (62) soit en regard de la surface d'appui (72) du talon,
- utiliser des cales calibrées (79) pour positionner la plaque de conformage (62), lesdites cales ayant une épaisseur sensiblement égale à la valeur de défoisonnement de la préforme, lesdites cales étant disposées entre la surface d'appui (72) du talon périphérique (68) et le bord périphérique (66) de la plaque de conformage (62),
- retirer lesdites cales calibrées (79),
- disposer des moyens d'étanchéité reliant la plaque de conformage (62) et l'outillage (54), tout autour de la préforme (50),
- polymériser ladite préforme (50).

2. Procédé selon la revendication 1, **caractérisé en ce qu'il** consiste à utiliser un outillage (54) avec un talon périphérique (68) dont la hauteur H est égale à la hauteur du chant de la pièce à réaliser.

3. Procédé selon l'une des revendications précédentes, **caractérisé en ce qu'il** consiste à extraire les gaz dans une cavité périphérique (82) qui s'étend sur tout le pourtour de la préforme, ladite cavité (82) étant délimitée par la surface de dépose (52), le chant (58) de la préforme, la plaque de conformage (62) et le talon (68).

4. Outillage permettant d'obtenir une pièce en matériau composite à partir d'une préforme (50) de fibres pré-imprégnées d'une résine, délimitée par une surface inférieure, une surface supérieure (56) et un chant périphérique (58), ledit outillage comprenant :
- une surface de dépose (52) apte à recevoir ladite préforme (50) avec un talon périphérique (68) délimitant une zone dont les dimensions sont supérieures à celles de la préforme (50) de manière à la loger, ledit talon périphérique (68) comprenant une surface d'appui (72) distante d'une valeur H de la surface de dépose (52),
- un habillage (60) comportant une plaque de conformage (62) apte à recouvrir ladite préforme (50), délimitée par un bord périphérique (66) qui s'étend au-delà du chant périphérique (58) de la préforme sur tout le pourtour de la préforme (50), ladite plaque de conformage (62) et le talon périphérique (68) ayant des dimensions telles que la face inférieure du bord périphérique (66) de la plaque de conformage (62) soit en regard de la surface d'appui (72) du talon, ledit dispositif étant **caractérisé en ce qu'**il comprend
- des moyens d'étanchéité reliant la plaque de conformage (62) et l'outillage (54), tout autour de la préforme (50),
- des cales calibrées pour positionner la plaque de conformage (62), lesdites cales ayant une épaisseur sensiblement égale à la valeur de défoisonnement de la préforme, et étant disposées entre la surface d'appui (72) du talon et le bord périphérique (66) de la plaque de conformage (62).

5. Outillage selon la revendication 4, **caractérisé en ce que** la hauteur H du talon (68) est égale à la hauteur du chant de la pièce à réaliser et **en ce que** le jeu entre la surface d'appui (72) et la plaque de conformage (62) est égal à la valeur de défoisonnement de la préforme (50).

6. Outillage selon la revendication 4 ou 5, **caractérisé en ce que** les moyens d'étanchéité reliant la plaque de conformage (62) et l'outillage (54) comprennent une bande (74) souple qui s'étend sur tout le pourtour de la plaque de conformage (62), l'un des bords latéraux de ladite bande souple (74) recouvrant le bord périphérique (66) de la plaque de conformage (62) alors que l'autre bord latéral vient en contact avec la surface d'appui (72).

7. Outillage selon l'une des revendications 4 à 6, **caractérisé en ce qu'**il comprend des moyens d'extraction de gaz qui débouchent via au moins un orifice (80) au niveau de la surface de dépose (52) entre le talon (68) et le chant périphérique (58) de la préforme (50).

8. Outillage selon la revendication 7, **caractérisé en ce qu'**il comprend plusieurs orifices (80), répartis sur le pourtour de la préforme, qui débouchent au niveau d'une cavité périphérique (82) qui s'étend sur tout le pourtour de la préforme, ladite cavité (82) étant délimitée par la surface de dépose (52), le chant (58) de la préforme, la plaque de conformage (62) et le talon (68).

## Patentansprüche

1. Verfahren zur Herstellung eines Teils aus Verbundmaterial, das ausgehend von einer Vorform (50) aus mit Harz vorimprägnierten Fasern erhalten wird, wobei das Verfahren darin besteht:
- die Vorform (50) auf einer Ablagefläche eines Werkzeugs (54) mit einem äußeren Absatz (68) abzulegen, der einen Bereich begrenzt, dessen Abmessungen größer als diejenigen der Vorform (50) sind, um diese aufzunehmen, wobei der äußere Absatz (68) eine Stützfläche (72) umfasst, die sich in einem Abstand H von der Ablagefläche (52) befindet,
- die Vorform (50) mit einer Abdeckung abzudecken, die eine Formplatte (62) aufweist, die von einem äußeren Rand (66) begrenzt ist, der sich über die äußere Schmalseite (58) der Vorform hinaus über den ganzen Umgebungsbereich der Vorform (50) erstreckt, wobei die Formplatte (62) und der äußere Absatz (68) derart bemessen sind, dass die Innenseite des äußeren Rands (66) der Formplatte (62) der Stützfläche (72) des Absatzes gegenüberliegt,
- kalibrierte Unterlagen (79) zu verwenden, um die Formplatte (62) auszurichten, wobei die Unterlagen eine Dicke aufweisen, die im Wesentlichen gleich dem Überstand der Vorform ist, und die Unterlagen zwischen der Stützfläche (72) des äußeren Absatzes (68) und dem äußeren Rand (66) der Formplatte (62) angeordnet sind,
- die kalibrierten Unterlagen (79) zurückzuziehen,
- Dichtmittel anzuordnen, die die Formplatte (62) und das Werkzeug (54) um die Vorform (50) herum verbinden,
- die Vorform (50) zu polymerisieren.

2. Verfahren nach Anspruch 1, **dadurch gekennzeichnet, dass** dieses darin besteht, ein Werkzeug (54) mit einem äußeren Absatz (68) zu verwenden, dessen Höhe H gleich der Höhe der Schmalseite des herzustellenden Teils ist.

3. Verfahren nach einem der vorhergehenden Ansprüche, **dadurch gekennzeichnet, dass** dieses darin besteht, die Gase in einem äußeren Hohlraum (82) zu entfernen, der sich über den gesamten Umgebungsbereich der Vorform erstreckt, und wobei der Hohlraum (82) durch die Ablagefläche (52), die Schmalseite (58) der Vorform, die Formplatte (62) und den Absatz (68) begrenzt ist.

4. Werkzeug zur Herstellung eines Teils aus Verbundmaterial ausgehend von einer Vorform (50) aus mit Harz vorimprägnierten Fasern, die von einer Innenseite, einer Außenseite (56) und einer umlaufenden Schmalseite (58) begrenzt ist, wobei das Werkzeug umfasst:
- eine Ablagefläche (52), die zur Aufnahme der Vorform (50) geeignet ist, mit einem äußeren Absatz (68), der einen Bereich begrenzt, dessen Abmessungen größer als diejenigen der Vorform (50) sind, um diese auszunehmen, wobei der äußere Absatz (68) eine Stützfläche (72) aufweist, die sich in einem Abstand H von der Ablagefläche (52) befindet,
- eine Abdeckung (60), die eine Formplatte (62) aufweist, die geeignet ist, die Vorform (50) abzudecken und die durch einen äußeren Rand (66) begrenzt ist, der sich über die umlaufende Schmalseite (58) der Vorform hinaus über den gesamten Umgebungsbereich der Vorform (50) erstreckt, wobei die Formplatte (62) und der äußere Absatz (68) derart bemessen sind, dass die Innenseite der umlaufenden Schmalseite (66) der Formplatte (62) der Stützfläche (72) des Absatzes gegenüberliegt, wobei die Vorrichtung **dadurch gekennzeichnet ist, dass** diese
- Dichtmittel aufweist, die die Formplatte (62) und das Werkzeug (54) um die Vorform herum (50) verbinden, und
- kalibrierte Unterlagen, um die Formplatte (62) auszurichten, wobei die Unterlagen eine Dicke aufweisen, die im Wesentlichen gleich dem Wert des Überstands der Vorform ist, und zwischen der Stützfläche (72) des Absatzes und des äußeren Rands (66) der Formplatte (62) angeordnet sind.

5. Werkzeug nach Anspruch 4, **dadurch gekennzeichnet, dass** die Höhe H des Absatzes (68) gleich der Höhe der Schmalseite des herzustellenden Teils ist und dass das Spiel zwischen der Stützfläche (72) und der Formplatte (62) gleich dem Wert des Überstands der Vorform (50) ist.

6. Werkzeug nach Anspruch 4 oder 5, **dadurch gekennzeichnet, dass** die Dichtmittel, die die Formplatte (62) und das Werkzeug (54) verbinden, einen weichen Streifen (74) aufweisen, der sich über den gesamten Umgebungsbereich der Formplatte (62) erstreckt, wobei einer der Seitenränder des weichen Streifens (74) den äußeren Rand (66) der Formplatte (62) abdeckt, während der andere Seitenrand in Kontakt mit der Stützfläche (72) steht.

7. Werkzeug nach einem der Ansprüche 4 bis 6, **dadurch gekennzeichnet, dass** es Mittel zum Entfernen von Gas aufweist, die mit wenigstens einer Öffnung (80) im Bereich der Ablagefläche (52) zwischen dem Absatz (68) und der umlaufenden Schmalseite (58) der Vorform (50) münden.

8. Werkzeug nach Anspruch 7, **dadurch gekennzeichnet, dass** dieses mehrere Öffnungen (80) aufweist, die über den Umgebungsbereich der Vorform verteilt sind und im Bereich eines umlaufenden Hohlraums (82) münden, der sich über den gesamten Umgebungsbereich der Vorform erstreckt, wobei der Hohlraum (82) durch die Ablagefläche (52), die Schmalseite (58) der Vorform, die Formplatte (62) und den Absatz (68) begrenzt ist.

## Claims

1. Method of manufacturing a composite material part from a preform (50) of fibers pre-impregnated with resin, said method consisting of :
- laying said preform (50) on a laying surface of a tool (54) with a peripheral shoulder (68) delimiting a zone whose dimensions are greater than those of the preform (50) so as to house said preform, said peripheral shoulder (68) comprising a support surface (72) spaced apart by a value H from the laying surface (52);
- covering said preform (50) with a lining comprising a conforming plate (62) delimited by a peripheral edge (66) which extends beyond the peripheral flank (58) of the preform over the entire periphery of the preform (50), said conforming plate (62) and said peripheral shoulder (68) having such dimensions that the lower surface of the peripheral edge (66) of the conforming plate (62) faces the support surface (72) of the shoulder;
- using shims (79) calibrated to position the conforming plate (62), said shims having a thickness substantially equal to the contraction value of the preform, said shims being arranged between the support surface (72) of the peripheral shoulder (68) and the peripheral edge (66) of the conforming plate (62);
- removing said calibrated shims (79);
- arranging sealing means connecting the conforming plate (62) and the tool (54) all around the preform (50);
- polymerizing said preform (50).

2. Method according to claim 1, **characterized in that** it consists of using a tool (54) with a peripheral shoulder (68) whose height H is equal to the flank height of the part to be made.

3. Method according to one of the previous claims, **characterized in that** it consists of extracting gas in a peripheral cavity (82) which extends over the entire periphery of the preform, said cavity (82) being delimited by the laying surface (52), the flank (58) of the preform, the conforming plate (62) and the shoulder (68).

4. Tool for manufacturing a composite material part from a preform (50) of fibers pre-impregnated with resin, delimited by a lower surface, an upper surface (56), and a peripheral flank (58), said tool comprising :
- a laying surface (52) adapted to receive said preform (50) with a peripheral shoulder (68) delimiting a zone whose dimensions are greater than those of the preform (50) so as to house said preform, said peripheral shoulder (68) comprising a support surface (72) spaced apart by a value H from the laying surface (52);
- a lining (60) comprising a conforming plate (62) adapted to cover said preform (50), delimited by a peripheral edge (66) which extends beyond the peripheral flank (58) of the preform over the entire periphery of the preform (50), said conforming plate (62) and the peripheral shoulder (68) having such dimensions that the lower surface of the peripheral edge (66) of the conforming plate (62) faces the support surface (72) of the shoulder ; said device being **characterized in that** it comprises :
- sealing means connecting the conforming plate (62) and the tool (54), all around the preform (50) ;
- shims calibrated to position the conforming plate (62), said shims having a thickness substantially equal to the contraction value of the perform adapted to be arranged between the support surface (72) of the shoulder and the peripheral edge (66) of the conforming plate (62).

5. Tool according to claim 4, **characterized in that** the height H of the shoulder (68) is equal to the flank height of the part to be made and **in that** the play between the support surface (72) and the conforming plate (62) is equal to the contraction value of the preform (50).

6. Tool according to claim 4 or 5, **characterized in that** the sealing means connecting the conforming plate (62) and the tool (54) comprise a flexible strip (74) which extends over the entire periphery of the conforming plate (62), one of the lateral edges of said flexible strip (74) covers the peripheral edge (66) of the conforming plate (62), whereas the other lateral edges comes in contact with the support surface (72).

7. Tool according to one of claims 4 to 6, **characterized in that** it comprises gas extraction means which open out via at least one opening (80) in the area of the laying surface (52) between the shoulder (68) and the peripheral flank (58) of the preform (50).

8. Tool according to claim 7, **characterized in that** it comprises several openings (80) which are distributed over the periphery of the preform and open out in the area of a peripheral cavity (82) extending over the entire periphery of the preform, said cavity (82) being delimited by the laying surface (52), the flank (58) of the preform, the conforming plate (62), and the shoulder (68).
